Europäisches Patentamt

European Patent Office

Office européen des brevets

(11) Publication number: **0 060 858**
**B1**

# EUROPEAN PATENT SPECIFICATION

(45) Date of publication of patent specification: 24.04.85

(51) Int. Cl.⁴: **G 05 B 9/02, G 05 B 19/405**

(21) Application number: 81902640.2

(22) Date of filing: 24.09.81

(86) International application number:
**PCT/GB81/00202**

(87) International publication number:
**WO 82/01264 15.04.82 Gazette 82/10**

(54) IMPROVEMENTS IN OR RELATING TO SERVOMECHANISMS.

(30) Priority: 30.09.80 GB 8031489

(43) Date of publication of application:
29.09.82 Bulletin 82/39

(45) Publication of the grant of the patent:
24.04.85 Bulletin 85/17

(84) Designated Contracting States:
DE FR GB NL

(56) References cited:
DE-A-2 158 729
FR-A-2 221 866
US-A-3 624 479
US-A-3 932 738

(73) Proprietor: BURROUGHS CORPORATION (a Michigan corporation)
Burroughs Place
Detroit, Michigan 48232 (US)

(72) Inventor: BERTI, Eugenio
15 Liquorstane Falkland
Fife, KY7 7DQ (GB)

(74) Representative: Kirby, Harold Douglas Benson et al
G.F. Redfern & Company Marlborough Lodge 14
Farncombe Road
Worthing West Sussex BN11 2BT (GB)

Courier Press, Leamington Spa, England.

EP 0 060 858 B1

## Description

The present invention relates to a servomechanism for controlling an output in response to a demand signal by the subtraction therefrom of a feedback signal and the application of the difference therebetween as the input to a load driving power amplifier, and it is an object of the invention to provide a servomechanism which is protected, by being shut down, in the event of the loss of the feedback signal, or overloading of its output.

While the invention is hereinafter described in relation to a servomechanism for positioning a read/write transducer in a disc data store, it is to be understood that this represents an example of and not a limitation on its use.

It is well known to employ a feedback servomechanism for radially positioning a read/write transducer over a rotating disc in a disc data store. The transducer is generally expensive, fragile, and intolerant of collision with the endstops which define the limits of its positioning range.

In the event of a failure of the feedback transducer signal, occasioned by such easily and cheaply remedied faults as a poor electrical connection thereto, the end of life of a light bulb, or the failure of a photocell, the power amplifier in the servomechanism responds only to the input demand signal, applied uncontrolled accelerating energy to the read/write transducer, and thereby necessitates the replacement of the read/write transducer subsequently to its destruction by single or repeated collision with its endstops.

While it is possible to arrange, in the operation of such a servomechanism, that the power amplifier should not remain in saturation for longer than a predetermined period dictated by the frequency response and damping factor of the servomechanism, and to arrange to monitor the output of the power amplifier and to disable it should it remain in any one sense of saturation for longer than said predetermined period, as shown in United Kingdom Patent Applications Nos. 80.19533 which was filed on 14th June 1980 and 81.15851 which was filed on 22nd May 1981 claiming priority from UK 80—19533, combined publication for both these applications being on 23rd December 1983 under the serial number 2,078,030 A, after the priority date of this application, there are circumstances where it is advantageous and desirable to arrange that the power amplifier should remain saturated for periods in excess of those consistent with servomechanism protection should the servomechanism happen to be out of control, and where such a scheme would be inappropriate. Such a set of circumstances arises when a head positioning servomechanism in a disc file is switched into velocity-controlled mode in order to execute the gross part of the movement of the head between data storage tracks. In order to minimise the transit time it is desirable to arrange that the power amplifier provides maximum accelerating and braking power to the load, thereby remaining near saturation for a time consistent with imparting a considerable potentially destructive velocity to the head. In order to minimise auto-induced velocity ringing in the load, it is also advantageous to arrange that the damping factor of the servomechanism is greater than unity, a state of affairs which also inhibits reversal of saturation polarity.

German Patent No. DE 2 158 729 discloses a servomechanism system for modulating a test signal on to a tailored analog of a demand signal, and for comparing the response of the servo with the tailored demand via a monitor amplifier, whereby it is detected when the controlled variable exceeds acceptable limits beyond the demand input and the further supply of energy to the servomechanism is halted. The use of a separate monitoring amplifier is wasteful of components, the servomechanism described is operable only to drive a unidirectional load, and the sensing of actual output against desired output means that undesirable energy must be delivered to the load before an error condition in the servomechanism can be detected.

The present invention consists in a feedback servomechanism wherein a summing junction provides an output representative of the difference between a control signal indicative of the desired value of a controlled attribute of a servomechanism load and a feedback signal from a transducer representative of the actual value of said controlled attribute, said output of said summing junction being coupled as the input to a power amplifier and the output of said power amplifier being coupled to drive said load towards equality between said actual and desired values, and wherein said load is protected against uncontrolled excursion of said actual value from said desired value by a sensing amplifier driving a monitor operable to sense said excursion and to respond thereto by activating an inhibitor for inhibiting the further supply of energy by said amplifier to said load, said servomechanism being characterized by comprising a demand controller coupled to receive a bidirectional demand signal, said demand controller comprising a test signal generator for sensing the polarity of said demand signal and for generating a test signal of the same polarity as said demand signal of sufficient magnitude to saturate the output of said power amplifier if applied as said control signal in the absence of said feedback signal, said demand controller being operable to provide as said control signal said demand signal repetitively replaced by said test signal, the duration of each instance of said replacement being sufficiently short to leave substantially unchanged the drive applied to said load from that value which would have been applied had said replacement not occurred, whereby said power amplifier is employed as said sensing amplifier for said monitor, said monitor being operable to monitor the state of saturation of said output of said power amplifier and to activate said inhibitor in the event of said output of said power amplifier failing to alter its state of saturation in response to said replacement of said demand signal by said test signal.

In a preferred embodiment a feedback servomechanism, for positioning a head in a disc file, comprises a demand signal controller for alternating the input demand signal with a test signal. The demand signal controller preferably comprises a digital-to-analog converter, in which case the input demand signal is preferably a parallel binary digit word and the controller preferably alternately applies, as the input to said converter, said binary word and a test word, the output of said converter being provided as the input to the summing junction of the servomechanism. The parallel binary word preferably comprises a binary digit indicative of the polarity of the signal to be applied to said summing junction, in which case said controller provides that said test word has the same polarity-indicating binary digit.

The output of the power amplifier of the servomechanism is preferably provided as the input to a monitor. The monitor preferably provides output indicative of said power amplifier being saturated, in which case the monitor preferably comprises a pair of voltage comparators, a first for providing indication of positive saturation of the output of said power amplifier, and a second for providing indication of negative saturation of the output of said power amplifier. The outputs of the comparators are preferably provided as the inputs to a decision circuit for deciding whether or not the output of said power amplifier is responding correctly to the test signal and for disabling the output if it is responding incorrectly.

The demand signal controller preferably applies the test signal at regularly timed intervals, in which case the decision circuit comprises a timer, retriggered by each alteration of the saturation state of the output of the power amplifier. The timer being in a triggered condition is preferably a prerequisite condition for the output of the power amplifier not to be disabled.

The output of the power amplifier is preferably disabled by means of a relay for disconnecting it from its load. The output of the power amplifier, once disabled, preferably remains disabled until reset by an externally applied signal. Whenever the power amplifier is disabled its load is preferably braked.

The invention is further explained, by way of an example, by the following description in conjunction with the appended drawings, in which:

Figure 1 shows, in schematic form, the preferred embodiment of the present invention.

Figure 2A shows an exemplary demand waveform and Figure 2B shows the power amplifier output waveform associated therewith.

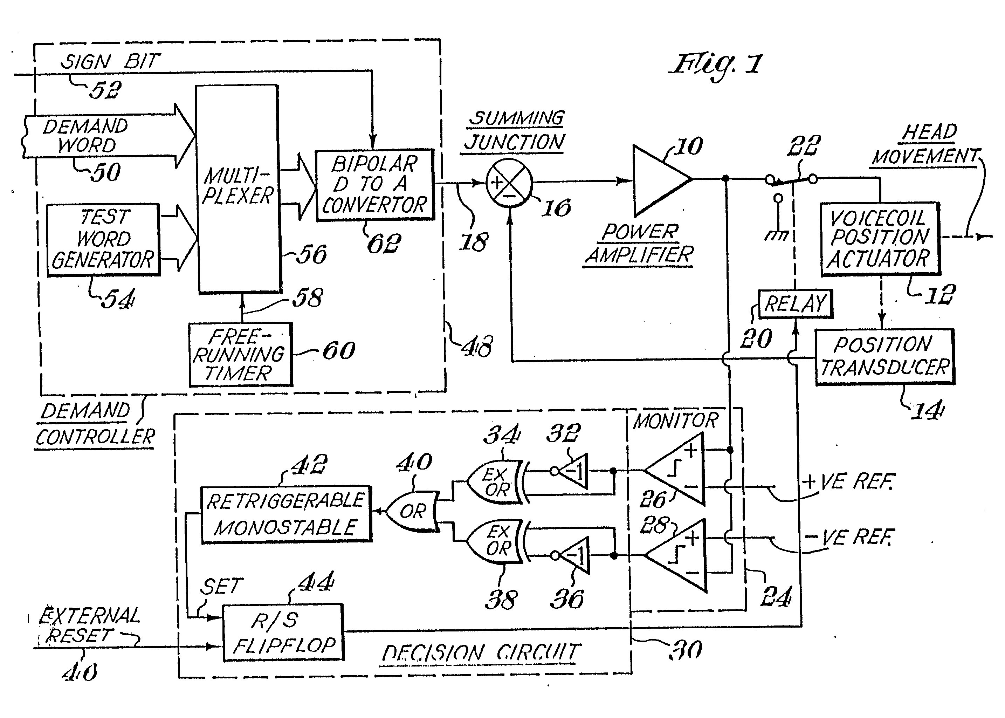

Figure 1 shows a schematic diagram of the preferred embodiment.

A head positioning servomechanism, for controlling the radial position of a magnetic read/write head on a rotating magnetic disc in a disc data store for the storage of retrievable, informational data, comprises a power amplifier 10, a voicecoil positional actuator 12, a position transducer 14 and a summing junction 16. This type of servomechanism is well known in the art. The voicecoil actuator 12 comprises a cylindrical coil of wire in a radial magnetic field. The coil is mechanically coupled to the head, which experiences a displacing force in sympathy with current flowing in the coil. The position transducer 14 is mechanically coupled to the read/write head and provides an output signal which is selectably either indicative of the radial position on the rotating disc of the head or of the radial velocity of the head across the disc. For the purposes of description of the invention, it is to be assumed that the position transducer 14 is selected to give, as its output, a signal proportional to the velocity of the head. The output of the transducer 16 is coupled as the subtractive input to the summing junction 16. A velocity demand signal is coupled as the additive input to the summing junction 16 via the demand coupling 18. The output of the summing junction 16 is the difference between its additive and subtractive inputs and is coupled, as an error signal, to the input of the power amplifier 10. The power amplifier 10 provides an amplified representation of its input as the motive energy to the coil in the actuator 12.

The servomechanism may be compensated, for stability, preferably in its feedback path via the transducer 14, but acceptably in the power amplifier 10, or via a combination of part compensation in both.

If the transducer 14 had been selected to give a head position indicating output, then the servo loop would be a position controlling loop as opposed to the velocity controlling loop described. Either kind of loop may be the subject of the present invention. The servomechanism need not be part of a disc file, but may be part of any apparatus requiring that the servomechanism be shut down in the event of failure.

A selectably energisable relay coil 20 controls a switch 22. When the relay coil 20 is not energised, the output of the power amplifier 10 is coupled to the actuator 12. When the relay coil 20 is energised the actuator 12 is shorted such that the kinetic energy which the read/write head possesses is electrically dissipated by the current induced by the radial magnetic field in the actuator coil, the actuator coil being disconnected from the power amplifier 10.

The output of the power amplifier 10 is coupled as the input to a monitor 24. The monitor 24 comprises a first comparator 26 for detecting positive saturation in the output of the power amplifier 10 and a second comparator 28 for detecting negative saturation in the output of the power amplifier 10.

The output of the power amplifier 10 is coupled to the non-inverting input of the first comparator 26 and a positive reference voltage +VE REF is coupled to the inverting input of the first comparator 26. The positive reference voltage +VE REF is a little less than the positive saturation voltage of the power amplifier 10. The first comparator 26 thus gives a logically true output whenever the power amplifier 10 is at or near positive saturation.

The output of the power amplifier 10 is coupled as the inverting input to the second comparator 28 and a negative reference voltage −VE REF is coupled to the non-inverting input of the second comparator 28. The negative reference voltage −VE REF is a little less negative than the negative saturation output level of the power amplifier 10. The second comparator 28 gives a logically true output whenever the output of the power amplifier is at or near negative saturation.

It is to be appreciated that other schemes exist for the detection of saturation. The power amplifier 10 need not have a bidirectional output, in which case it is only necessary to detect whether its output is either saturated or not saturated.

The outputs of the first and second comparators 28, 26 are coupled as the inputs to a decision circuit 30. A combination of a first inverter 32 and a first exclusive OR gate 34 provides a short, logically true pulse on the output of the first exclusive OR gate 34 whenever the output of the first comparator 26 passes from logically true to logically false or passes from logically false to logically true.

A combination of a second inverter 36 and a second exclusive OR gate 38 provides a short, logically true pulse on the output of the second exclusive OR gate 38 whenever the output of the second comparator 28 passes from logically true to logically false or passes from logically false to logically true.

The output of the first exclusive OR gate 34 and of the second exclusive OR gate 38 are provided as inputs to an OR gate 40 which, provides, as its output, a short, logically true pulse whenever the output of the power amplifier 10 passes into or out of positive or negative saturation.

The output of the OR gate 40 is provided as the triggering input to a retriggerable monostable timer 42. Whenever the monostable 42 receives a triggering pulse it commences a timing operation. During a timing operation the monostable 42 provides a logically true output. If a further triggering pulse is received before the end of the timing operation, the timing operation is recommenced and the output of the monostable 42 remains logically true. If a triggering pulse is not received before the end of a timing operation the output of the monostable 42 reverts to logically false. Thus, provided the monostable 42 is supplied with triggering pulses before the end of each timing operation its output will remain logically true.

The output of the monostable 42 is provided as the setting input to an R/S flip flop 44. An external reset signal is provided to the flip flop 44 via a reset line 46. The flip flop 44 is set whenever the signal from the output of the monostable 42 is logically false, and reset whenever the signal on the external line 46 is logically false. Whenever the flip flop 44 is set it provides a logically true output signal, and whenever it is reset it provides a logically false output signal.

The output of the flip flop 44 is coupled, via a power driver, not here shown, to the relay coil 20, such that whenever the output of the flip flop 44 is logically true, the relay coil 20 is activated and the switch 22 disconnects the actuator 12 from the output of the power amplifier 10 and shorts out the actuator coil 12, but when the output of the flip flop is logically false the relay coil 20 is not activated and the switch 22 connects the output of the power amplifier 10 to the actuator 12.

The velocity demand signal is provided on the demand coupling 18 by the demand controller 48.

The controller 48 receives a 7 bit parallel binary demand word indicative of the required velocity of the read/write head via a 7 line demand bus 50 together with a polarity indicating binary digit on the sign line 52. Whenever the signal on the sign line 52 is logically true, the word on the demand bus 50 is taken as being positive, and whenever the signal on the sign line 52 is logically false, the word on the demand bus 50 is taken as being negative.

A test word generator 54 provides a 7 bit parallel binary digit test word as an output. The generator 54 may be a semiconductor device, such as a rom, or a simple arrangement of diodes, resistors and the like.

The 7 bit demand word from the demand bus 50 is provided as the first input to a multiplexer 56. The 7 bit test word from the generator 54 is provided as the second input to the multiplexer 56. Whenever the signal on a control input 58 of the multiplexer 56 is logically true, the multiplexer 56 provides, as its output, the 7 bit demand word. Whenever the signal on the control input 58 of the multiplexer 56 is logically false the multiplexer 56 provides, as its output, the 7 bit test word from the generator 54.

A free running timer 60 provides, as its output, coupled as the control input to the multiplexer 56, a signal which is logically true except for 100 microsecond periods regularly spaced at 5 millisecond intervals, during which periods it is logically false.

The multiplexer 56, thus provides, as its output, in response to the output of the timer 60, the demand word, alternating with 100 microsecond periods of the test word every 5 milliseconds.

The output of the multiplexer 56 is provided as the number input to a bidirectional digital to analog converter 62. The sign bit on the sign line 52 is provided as the output polarity controlling input to the converter 62. The converter 62 provides an analog output signal whose magnitude is proportional to the size of the binary word provided at its number input and whose sense is positive if the sign bit is logically true and negative if the sign but is logically false. The analog output of the converter 62 is provided as the demand signal on the demand coupling 18.

The particular repetition period and duration of the presentation of the test word on the output of the multiplexer 56 is a matter of design choice. The duty cycle, in this case 2%, is chosen so as to not interfere greatly with the average level of demand signal on the demand coupling 18 and so avoid unnecessary restriction of demand range. The repetition frequency is chosen, firstly, to avoid exciting any resonances in the actuator 12 and secondly, so that the period is longer than the natural period of saturation of the power amplifier 10 during transient acceleration conditions. The duration of the test word's application is chosen such that the voltage transient appearing on the input to the actuator 12 is too short to cause significant current change in the inductance of the coil of the actuator 12. The duty cycle may be compensated for by increasing the size of the demand word such that the mean level of the analog demand signal on the demand coupling 18 is the same as if the test word were never applied.

The power amplifier 10 is of high gain and bandwidth. Its gain is such that the binary word 0000001, presented at the input to the converter 62, in the absence of a feedback signal from the transducer 14, is able to saturate the output of the amplifier 10. The binary word 0000001 is thus chosen as the test word provided by the generator 54. Had the gain of the amplifier 10 been less, another binary word would have been used as the test word, that word being the least binary number which, when applied to the converter 62, in the absence of feedback, saturates the output of the amplifier 10. The choice of the least binary number for amplifier 10 saturation is not restrictive. A larger binary number may be chosen. The least number, however, represents the preferred manner of circuit operation.

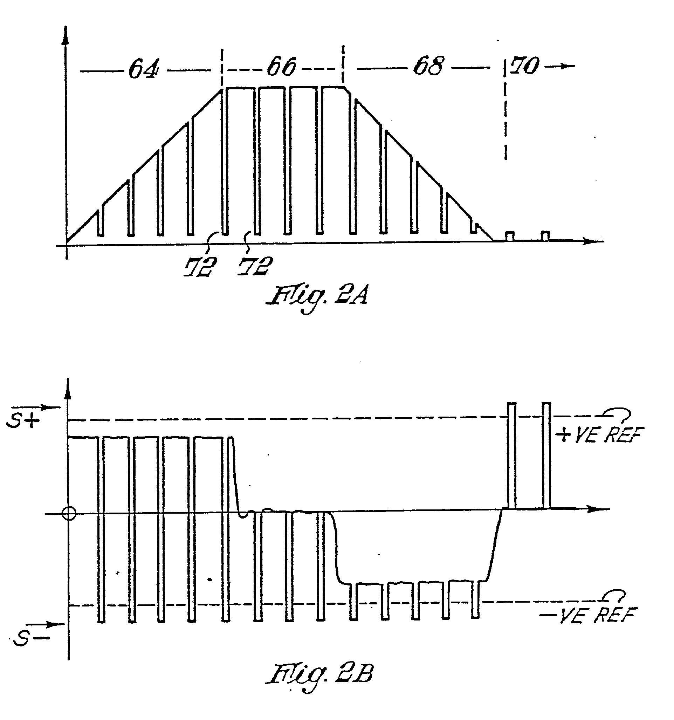

Figure 2A shows an exemplary analog demand signal on the demand coupling 18 which can be applied to cause the servomechanism to move the read/write head between tracks. The vertical axis represents the applied voltage and the horizontal axis represents time. The analog demand signal comprises an acceleration period 64, during which the read/write head picks up speed, a cruising period 66 during which the head moves with constant speed, and a deceleration period 68 during which the velocity of the head is reduced back to zero. A rest period 70 may be involved during which the head is required to remain stationary. The demand signal profile is generated externally as a sequence of binary demand words in response to the position of the head on the disc, the manner of its generation constituting no part of the present invention. The particular profile shown is chosen as incorporating every manner of operation of the servomechanism.

The analog demand signal is interrupted by the regularly repeated test spikes 72 where the signal falls to the level of the test word in this case the voltage level represented by the word 0000001.

Figure 2B shows an exemplary power amplifier 10 output waveform such as might be associated with the demand profile of Figure 2A. The vertical axis shows output voltage and the horizontal axis shows time to the same scale and reference as the horizontal time axis of Figure 2A.

In the operation of a servomechanism correction is made such that the feedback voltage, in this case the output of the transducer 14, tends towards equality with the demand voltage, in this example the profile of Figure 2A. If the feedback signal were lost, then the power amplifier 10 would be driven, by the demand signal, into saturation. The test signal, being of the same polarity as the demand signal, would maintain the saturation of the power amplifier 10 in the same sense. The output of the amplifier 10 would thus never change and the operation would be detected as faulty.

In Figure 2B, during the acceleration period 64, the mean output level of the power amplifier 10 is such as to cause acceleration of the read/write head. Except when the test spikes 72 are applied, the feedback voltage substantially equals the demand voltage and the output of the power amplifier 10 hovers with a mean level in the positive half of its range. The actual power amplifier 10 output may show excursions to both positive and negative saturation, dependently upon the loop gain of the servomechanism. These excursions will last for a period characteristic upon the bandwidth and damping factor of the servomechanism. It is usual, even when the servomechanism is greater than critically damped, that a short period of saturation occurs during changes between rest, acceleration and deceleration. The repetition period of the test spikes 72 is therefore chosen to be greater than such a period of saturation.

Whenever the test spikes 72 are applied, the output of the amplifier 10 is forced into negative saturation. Each entry into negative saturation retriggers the monostable 42 and maintains its output in the operational state.

During the cruise period 66 the mean output of the amplifier 10 is just sufficient to overcome friction. Again, whenever the test spikes 72 are applied negative saturation is produced and the monostable 42 is retriggered.

During the deceleration period 68 the output of the amplifier 10 goes negative, maintaining, on average, a sufficient level to decelerate the read/write head. Again, whenever the test spikes 72 are applied, the amplifiers 10 output goes into negative saturation and retriggers the monostable 42.

During a rest period the test spikes 72 have a changed polarity with respect to the average analog demand signal and cause positive saturation of the output of the amplifier 10. This too retriggers the monostable 42.

It may be that, because of instantaneous conditions with the servomechanism, the test spikes 72 are unable to assure a saturated response. Such conditions can occur when the amplifier 10 is already saturated. In this case it is sufficient, for the retriggering of the monostable 42, that the test spike 72 brings the amplifier 10 out of saturation, without necessarily inducing saturation of the opposite sense.

The present invention may be employed not only to sense the loss of a feedback signal, but also to determine when unnecessarily high loads are being applied. For example, if load friction or inertia were to be increased in the example given, then a point would be reached when the feedback signal from the position transducer 14 would fail to match the analog demand signal to such an extent that the difference therebetween is greater than the size of the test spikes 72 and the amplifier 10 is thus overdriven to the point where application of the test spike 72 fails to produce an alteration in the saturation state of the amplifier 10. Judicious choice of the test word, at a value greater than the minimum required to saturate the amplifier 10 in the absence of feedback, will determine at what level of overload the monostable 42 fails to be retriggered and the relay 20 is activated to shut down the servomechanism.

The test spikes 72 may be applied as an analog signal, rather than a binary word, as may the demand signal. In a multi-mode servomechanism, the level of the test spikes may be made selectable for each mode. One or more different test signals may be sequentially applied. The operation of all except the digital-to-analog converter 62 in the demand controller 48, and/or the decision circuit 30, may be incorporated into the activity of a digital processor. The test spikes 72 need not be regularly applied, and the decision whether or not to shut down the servomechanism may be taken on the basis of a response-per-spike condition rather than of a sufficient frequency of responses.

**Claims**

1. A feedback servomechanism wherein a summing junction (16) provides an output representative of the difference between a control signal (18) indicative of the desired value of a controlled attribute of a servomechanism load (12) and a feedback signal from a transducer (14) representative of the actual value of said controlled attribute, said output of said summing junction being coupled as the input to a power amplifier (10) and the output of said power amplifier being coupled to drive said load (12) towards equality between said actual and desired values, and wherein said load (12) is protected against uncontrolled excursion of said actual value from said desired value by a sensing amplifier driving a monitor (24, 30) operable to sense said excursion and to respond thereto by activating an inhibitor (20, 22) for inhibiting the further supply of energy by said amplifier (10) to said load (12), said servomechanism being characterized by comprising a demand controller (48) coupled to receive a bidirectional demand signal (50, 52), said demand controller (48) comprising a test signal generator (54, 62) for sensing the polarity of said demand signal (50, 52) and for generating a test signal (72) of the same polarity as said demand signal (50, 52) of sufficient magnitude to saturate the output of said power amplifier (10) if applied as said control signal (18) in the absence of said feedback signal, said demand controller (48) being operable to provide as said control signal (18) said demand signal (50, 52) repetitively replaced by said test signal (72), the duration of each instance of said replacement being sufficiently short to leave substantially unchanged the drive applied to said load (12) from that value which would have been applied had said replacement not occurred, whereby said power amplifier (10) is employed as said sensing amplifier for said monitor (24, 30), said monitor being operable to monitor the state of saturation of said output of said power amplifier (10) and to activate said inhibitor (20, 22) in the event of said output of said power amplifier (10) failing to alter its state of saturation in response to said replacement of said demand signal by said test signal.

2. A servomechanism according to Claim 1, further characterized by the time between successive replacements of said demand signal (50, 52) by said test signal (72) being longer than the longest period of saturation of said output of said power amplifier (10) which is experienced during normal working of said servomechanism but shorter than the time required, in the event of said feedback signal being lost, for said load (12) to acquire a potentially destructive amount of energy.

3. A servomechanism according to Claim 1 or 2, further characterized by said demand controller (48) comprising a multiplexer (56) in receipt of an enumerating portion (50) of a demand word as a first input, in receipt of a test word (54) as a second input, and operable in response to a selection input (58) to select and provide as an output either said first or said second input, said output of said multiplexer (56) being provided as the enumerating input to a digital-to-analog converter (62) operable to provide an analog output signal, for use as said control signal (18), with magnitude representative of the magnitude of the binary number represented by said enumerating input and with polarity selectable in response to a polarity selecting input (52), where a polarity indicating portion (52) of said demand word (50, 52) is provided directly as said polarity selecting input to said digital-to-analog converter (62) for said digital-to-analog converter (62) to provide an analog output signal (18) for said test word which is of the same polarity as the output signal (18) for said demand word (50, 52) regardless of the polarity of said demand word (50, 52).

4. A servomechanism according to Claim 3, further characterized by said demand controller (48) comprising a regular, free-running timer (60) for providing said selection input (58) to said multiplexer (56) whereby said multiplexer (56) regularly selects as its sequence of outputs said test word for a first predetermined period followed by said enumerating portion (50) of said demand word (50, 52) for a second predetermined period.

5. A servomechanism according to any of the preceding Claims, further characterized by said monitor (24, 30) comprising a sensor (26, 28, 32, 34, 36, 38, 40) coupled to monitor said output of said power amplifier (10) and operable to provide an output indicative of each instance of said output of power amplifier (10) entering or leaving a state of saturation, and a retriggerable timer (42), operable to provide an output indicative of its being in the course of performing a timing operation, coupled to receive said output of said sensor (26, 28, 32, 34, 36, 38, 40), and operable to be triggered or retriggered to commence or to recommence said timing operating upon the receipt of each indication from said sensor (26, 28, 32, 34, 36, 38, 40), the duration of said timing operation being longer than the period between successive instances of said replacement and said monitor (24, 30) activating said inhibitor (20, 22) only in the event of said retriggerable timer (42) not being in the course of said timing operation.

6. A servomechanism according to Claim 5, wherein said retriggerable timer (42) is operable to place a register (44) in a first state when not in the course of performing said timing operation, and wherein said register (44) is placeable into a second state in response to an externally provided reset signal (46), said register (44) being operable to activate said inhibitor (20, 22) when in said first state, and to deactivate said inhibitor (20, 22) when in said second state whereby said power amplifier (10) is inhibited from supplying energy to said load (12) from the first instance of said retriggerable timer (42) failing to be retriggered during the course of said timing operation and finishing said timing operation and the external application of said reset signal (46).

7. A servomechanism according to Claim 5 or 6, wherein said sensor (26, 28, 32, 34, 36, 38, 40) comprises: a first comparator (26) in receipt of said output of said power amplifier (10) as a first input, in receipt of a first reference level (+VE REF) as a second input, and operable to provide a logic output indicative of whether said output of said power amplifier (10) is greater or less than said first reference level (+VE REF); and a second comparator (28) in receipt of said output of said power amplifier (10) as a first input, in receipt of a second reference level (−VE REF) as a second input, and operable to provide a logic output indicative of whether said output of said power amplifier (10) is greater than or less than said second reference level (−VE REF).

8. A servomechanism according to Claim 7, comprising a pulse generation circuit (32, 34, 36, 38, 40) in receipt of said output of said first comparator (26) as a first input, in receipt of said output of said second comparator (28) as a second input, and operable to provide an output pulse for each instance of said output of said first comparator (26) or said output of said second comparator (28) altering its respective indication.

9. A servomechanism according to any of the preceding Claims, wherein said inhibitor comprises a switch (20, 22) operable to disconnect said output of said power amplifier (10) from said load (12) in response to said monitor (24, 30).

10. A servomechanism according to Claim 9, comprising an energy dissipator for removing energy from said load (12) in the event of said operation of said switch (20, 22).

11. A servomechanism according to any of the preceding Claims for use in positioning a read/write head assembly in a disc data store, wherein said power amplifier is a voltage amplifier (10), said load (12) is an electric motor for driving said head assembly.

12. A servomechanism according to Claim 11 when dependent upon Claim 10, wherein said switch is an electro-magnetic relay (20, 22) and said energy dissipator is a secondary set of contacts on said relay for shorting out the input terminals of said motor subsequently to the disconnection of said motor from said output of said power amplifier (10).

13. A servomechanism according to Claim 3 or 4, or according to any of Claims 5 to 12 when dependent upon Claim 3, wherein said test word (54) is a plural, parallel binary digit word representative of the least binary number which, when provided as said input to said digital-to-analog converter (62), causes said analog output signal (18) to be sufficiently large to saturate said power amplifier in the absence of said feedback signal.

14. A servomechanism according to Claim 3, Claim 4, or according to any of Claims 5 to 12 when dependent upon Claim 3, wherein said test word (54) is a plural, parallel binary digit word representative of the least binary number which, when applied as said input to said digital-to-analog converter (62), causes said analog output signal (18) to be sufficiently large to alter the state of saturation of said output of said power amplifier (10) even when said output of said power amplifier (10) is already saturated as a result of supplying up to a predetermined amount of power to said load (12).

**Revendications**

1. Servo-mécanisme à réaction dans lequel une jonction d'addition (16) donne une sortie représentant la différence entre un signal de commande (18) indiquant la valeur souhaitée d'un élément contrôlé d'une charge de servo-mécanisme (12) et un signal de réaction d'un transducteur (14), représentant la valeur réelle de l'élément contrôlé, la sortie de la jonction d'addition étant couplée comme entrée à un amplificateur de puissance (10) et la sortie de l'amplificateur de puissance étant couplée pour entraîner la charge (12) vers l'égalité entre la valeur réelle et la valeur souhaitée, et la charge (12) est protégée contre une excursion incontrôlée de la valeur réelle par rapport à la valeur souhaitée par un amplificateur de détection entraînant un moniteur (24, 30) fonctionnant pour détecter l'excursion et répondant à cela en activant un élément inhibiteur (20, 22) pour interdire tout nouvel envoi d'énergie par l'amplificateur (10) à la charge (12), ce servo-mécanisme étant caractérisé en ce qu'il comprend un contrôleur de demande (48) branché de façon à recevoir un signal bidirectional de demande (50, 52), le contrôleur de demande (48) comportant un générateur de signal du test (54, 62) pour détecter la polarité du signal de demande (50, 52) et pour générer un signal de test (72) de même polarité que le signal de demande (50, 52), d'amplitude suffisante pour saturer la sortie de l'amplificateur de puissance (10) lorsqu'il est appliqué comme signal de commande (18) en l'absence de signal de réaction, ce contrôleur de demande (48) fonctionnant pour fournir comme signal de commande (18) le signal de demande (50, 52) remplacé de façon répétée par le signal de test (72), la durée de chaque remplacement étant suffisamment courte pour laisser pratiquement inchangé l'entraînement appliqué à la charge (12) par rapport à la valeur qui serait appliquée si le remplacement ne s'était pas produit, l'amplificateur de puissance (10) étant utilisé comme amplificateur de détection pour le moniteur (24, 30), ce moniteur pouvant fonctionner pour contrôler l'état de saturation de la sortie de l'amplificateur de puissance (10) et pour activer l'élément inhibiteur (20, 22) au cas où la sortie de l'amplificateur de puissance (10) était défaillante pour modifier son état de saturation en réponse à ce remplacement du signal de demande par le signal de test.

2. Servo-mécanisme selon la revendication 1, caractérisé en outre en ce que le temps entre les remplacements successifs du signal de demande (50, 52) par le signal de test (72) est plus long que la plus longue période de saturation de la sortie de l'amplificateur de puissance (10) qui est constatée au cours du fonctionnement normal du servo-mécanisme mais plus court que le temps nécessaire à la charge (12) pour acquérir une quantité d'energie susceptible de la détruire en cas de perte du signal de réaction.

3. Servo-mécanisme selon la revendication 1 et 2, caractérisé en outre en ce que le contrôleur de demande (48) comprend un multiplexer (56) dans la réception d'une partie d'énumération (50) d'un mot de demande comme première entrée, dans la réception d'un mot de test (54) comme seconde entrée et qui peut être mis en oeuvre en réponse à une entrée de sélection (58) pour choisir et fournir comme sortie, soit la première, soit la seconde entrée, la sortie du multiplexeur (56) étant fournie comme entrée d'énumération à un convertisseur numérique/analogique (62) susceptible de fournir un signal de sortie analogique pour servir de signal de commande (18), l'amplitude représentant l'amplitude du nombre binaire représenté par l'entrée d'énumération et dont la polarité est choisie en fonction de l'entrée de sélection de polarité (52), une partie indicatrice de polarité (52) du mot de demande (50, 52) étant fournie directement comme entrée de sélection de polarité au convertisseur numérique/analogique (62) pour que ce convertisseur numérique/analogique (62) fournisse un signal de sortie analogique (18) pour le mot de test qui a la même polarité que le signal de sortie (18) de ce mot de demande (50, 52) quelle que soit la polarité du mot de demande (50, 52).

4. Servo-mécanisme selon la revendication 3, caractérisé en outre en ce que le contrôleur de demande (48) comporte une horloge (60) tournant librement pour fournir l'entrée de sélection (58) au multiplexeur (56), le multiplexeur (56) choisissant régulièrement comme séquence de ses sorties, le mot de test pour une première période prédéterminée suivie par la partie d'énumération (50) du moteur de demande (50, 52) pour une seconde période prédéterminée.

5. Servo-mécanisme selon l'une des revendications précédentes, caractérisé en outre en ce que le moniteur (24, 30) comprend un détecteur (26, 28, 32, 34, 36, 38, 40) couplé pour contrôler la sortie de l'amplificateur de puissance (10) et fournissant une sortie indiquant chaque fois que la sortie de l'amplificateur de puissance (10) passe dans un état de saturation ou en sort, ainsi qu'une horloge redéclenchable (42) fournissant une sortie indiquant qu'elle est en cours d'effectuer une opération de comptage de temps, branchée de façon à recevoir la sortie du détecteur (26, 28, 32, 34, 36, 38, 40) et pour être déclenchée ou redéclenchée pour commencer ou recommencer l'opération de comptage de temps à la réception de chaque indication du détecteur (26, 28, 32, 34, 36, 38, 40), la durée de l'opération de comptage de temps étant supérieure à la période entre les instants successifs du remplacement et du contrôleur (24, 30) activant l'inhibiteur (20, 22) seulement au cas où l'horloge redéclenchable (42) n'est pas en cours de comptage de temps.

6. Servo-mécanisme selon la revendication 5, caractérisé en ce que l'horloge redéclenchable (42) peut placer un registre (44) dans un premier état lorsqu'elle n'est pas en cours d'effectuer une opération de comptage de temps et le registre (44) peut être mis dans un second état en réponse à un signal de remise à l'état initial (46) d'origine externe, le registre (44) pouvant activer l'inhibiteur (20, 22) lorsqu'il est dans le premier état et désactiver l'inhibiteur (20, 22) lorsqu'il est dans le second état, l'amplificateur de puissance (10) ne pouvant fournir d'énergie à la charge (12) à partir du premier moment lorsque l'horloge redéclenchable (42) ne se redéclenche pas au cours de l'opération de comptage de temps et termine l'opération de comptage de temps, et l'application externe du signal de remise à l'état initial (46).

7. Servo-mécanisme selon la revendication 5 ou 6, caractérisé en ce que le détecteur (26, 28, 32, 34, 36, 38, 40) comprend: un premier comparateur (26) qui reçoit la sortie de l'amplificateur de puissance (10) comme première entrée, qui reçoit un premier niveau de référence (+VE REF) comme seconde entrée et qui fournit une sortie logique indiquant si la sortie de l'amplificateur de puissance (10) est supérieure ou inférieure au premier niveau de référence (+VE REF) et un second comparateur (28) qui reçoit la sortie de l'amplificateur de puissance (10) comme première entrée et un second niveau de référence (−VE REF) comme seconde entrée, et fournit une sortie logique indiquant si la sortie de l'amplificateur de puissance (10) est supérieure ou inférieure au second niveau de référence (−VE REF).

8. Servo-mécanisme selon la revendication 7, comprenant un circuit générateur d'impulsions (32, 34, 36, 38, 40) qui reçoit la sortie du premier comparateur (26) comme première entrée et la sortie du second comparateur (28) comme seconde entrée et qui peut fournir une impulsion de sortie chaque fois que la sortie du premier comparateur (26) ou celle du second comparateur (28) modifie son indication respective.

9. Servo-mécanisme selon l'une des revendications précédentes, dans lequel l'inhibiteur comporte un commutateur (20, 22) susceptible de couper la sortie de l'amplificateur de puissance (10) par rapport à la charge (12) en réponse au moniteur (24, 30).

10. Servo-mécanisme selon la revendication 9, comprenant un élément de dissipation d'énergie pour enlever l'énergie de la charge (12) en cas de fonctionnement du commutateur (20, 22).

11. Servo-mécanisme selon l'une des revendication précédentes servant à positionner un ensemble de tête de lecture/inscription dans un disque de stockage de données, l'amplificateur de puissance étant un amplificateur de tension (10), la charge (12) étant un moteur électrique pour entraîner l'ensemble de la tête.

12. Servo-mécanisme selon la revendication 11 prise avec la revendication 10 dans lequel le commutateur est un relais électromagnétique (20, 22) et l'élément de dissipation d'énergie est un ensemble secondaire de contacts du relais pour court-circuiter les bornes de sortie du moteur après la coupure du moteur par rapport à la sortie de l'amplificateur de puissance (10).

13. Servo-mécanisme selon la revendication 3 ou 4 selon l'une des revendications 5 à 12 en dépendance avec la revendication 3 dans lequel le mot de test (54) est un mot numérique binaire parallèle multiple représentant au moins le nombre binaire qui, lorsqu'il est fourni comme entrée au convertisseur numérique/analogique (62) fait que le signal de sortie analogique (18) soit suffisamment grand pour saturer l'amplificateur de puissance en l'absence de signal de réaction.

14. Servo-mécanisme selon la revendication 3, 4 ou l'une des revendications 5 à 12 en dépendance avec la revendication 3 dans lequel le mot de test (54) est un mot numérique binaire parallèle multiple représentant le nombre binaire le plus petit qui lorsqu'il est appliqué à l'entrée du convertisseur numérique/ analogique (62) fait que le signal de sortie analogique (18) soit suffisamment grand pour modifier l'état de saturation de la sortie de l'amplificateur (10) même si la sortie de l'amplificateur de puissance (10) est déjà saturée par suite de l'envoi d'une quantité prédéterminée d'énergie à la charge (12).

**Patentansprüche**

1. Rückgekoppelter Nachlaufregler mit einem Summier-Knotenpunkt (16), der ein Ausgangssignal abgibt, das der Differenz zwischen einem dem Sollwert einer geregelten Eigenschaft einer Nachlaufregler-Last (12) entsprechenden Steuersignal (18) und einem von einem Wandler (14) abgegebenen, dem Istwert der geregelten Eigenschaft entsprechenden Rückkopplungssignal entspricht, wobei das Ausgangssignal des Summier-Knotenpunktes als Eingangssignal an einen Leistungsverstärker (10) abgegeben wird und der Ausgang des Leistungsverstärkers die Last (12) bis zur Gleichheit zwischen Soll- und Istwert antreibt und wobei die Last (12) gegen ungeregelte Abweichungen des Istwertes vom Sollwert durch einen Abtastverstärker geschützt ist, der eine Überwachungseinrichtung (24, 30) ansteuert, die die Abweichung erfasst und eine Blockiereinrichtung (20, 22) zur Unterbrechung der weiteren Energiezufuhr vom Verstärker (10) zur Last (12) aktiviert, gekennzeichnet durch eine Anforderungs-Steuereinrichtung, die ein bidirektionales Anforderungssignal (50, 52) empfängt und einen Testsignalgenerator (54, 62) zur Erfassung der Polarität des Anforderungssignals (50, 52) enthält, ein Testsignal (72) gleicher Polarität wie die des Anforderungssignals (50, 52) und ausreichender Stärke zur Sättigung des Leistungsverstärkerausgangs (10) bei Abwesenheit des Rückkopplungssignals erzeugt und als Steuersignal (18) das Anforderungssignal (50, 52) abgibt, das wiederholt durch das Testsignal (72) ersetzt wird, wobei die Dauer des Falls des Ersatzes ausreichend kurz ist, um die der Last (12) zugeführte Antriebsgröße im wesentlichen unverändert von dem Wert beizubehalten, der abgegeben worden wäre, wenn der Ersatz nicht erfolgt wäre, wobei der Leistungsverstärker (10) als Abtastverstärker für die Überwachungseinrichtung (24, 30) dient, die den Zustand der Sättigung des Ausgangssignals des Leistungsverstärkers (10) überwacht und die Blockiereinrichtung (20, 22) ansteuert, wenn das Ausgangssignal des Leistungsverstärkers (10) seinen Sättigungszustand bei einem Ersatz des Anforderungssignals durch das Testsignal nicht ändert.

2. Nachlaufregler nach Anspruch 1, dadurch gekennzeichnet, daß die Zeit zwischen aufeinanderfolgenden Ersetzungen des Anforderungssignals (50, 52) durch das Testsignal (72) länger als die längste, auf der Grundlage des Normalbetriebes des Nachlaufreglers ermittelten Sättigungsperiode des Ausgangssignals des Leistungsverstärkers (10), jedoch kürzer als die Zeit ist, die für den Fall des Ausfalls des Rückkopplungssignals erforderlich ist, um der Last (12) einen zu ihrer Zerstörung führenden potentiellen Energiebetrag zuzuführen.

3. Nachlaufregler nach Anspruch 1 oder 2, dadurch gekennzeichnet, daß die Anforderungs-Steuereinrichtung (48) einen Multiplexer (56) enthält, der als erstes Eingangssignal einen spezifizierten Teil (50) eines Anforderungswortes und als zweites Eingangssignal ein Testwort (54) empfängt und auf ein Auswahl-Eingangssignal (58) als Ausgang entweder das erste oder das zweite Eingangssignal auswählt und abgibt, daß der Ausgang des Multiplexers (56) als spezifizierter Eingang an einen Digital-Analogumsetzer (62) abgeben wird, der ein analoges Ausgangssignal ab-

gibt, das als Steuersignal (18) dient, dessen Größe der Größe der Binärziffer entspricht, die vom spezifizierten Eingangssignal abhängt und dessen Polarität von einem Polaritäts-Auswahleingang (52) abhängt, wobei ein Polaritätsanzeigeanteil (52) des Anforderungswortes (50, 52) unmittelbar als Polaritätsauswahleingangssignal an den Digital-Analogumsetzer (62) abgegeben wird, damit der Digital-Analogumsetzer (62) ein analoges Ausgangssignal (18) als Testwort abgibt, das dieselbe Polarität wie das Ausgangssignal (18) des Anforderungswortes (50, 52) unabhängig von der Polarität des Anforderungswortes (50, 52) aufweist.

4. Nachlaufregler nach Anspruch 3, dadurch gekennzeichnet, daß die Anforderungs-Steuereinrichtung (48) einen geregelten, freilaufenden Zeitgeber (60) enthält, der das Selektions-Eingangssignal (58) an den Multiplexer abgibt, wobei der Multiplexer (56) regelmäßig als Ausgangssignalfolge das Testwort für eine erste vorbestimmte Zeitperiode gefolgt von dem spezifizierten Teil (50) des Anforderungswortes (50, 52) für eine zweite vorbestimmte Zeitperiode auswählt.

5. Nachlaufregler nach einem der vorstehenden Ansprüche, dadurch gekennzeichnet, daß die Überwachungseinrichtung (24, 30) einen Sensor (26, 28, 32, 34, 36, 38, 40) zur Erfassung des Ausgangssignals des Leistungsverstärkers (10) und zur Abgabe eines Ausgangssignals, das jedes Erreichen oder Verlassen des Sättigungszustandes des Ausgangssignals des Leistungsverstärkers (10) anzeigt, und einen rücksetzbaren Zeitgeber (42) enthält, der ein Ausgangssignal während der Durchführung einer Zeitgeberoperation abgibt und das Ausgangssignal des Sensors (26, 28, 32, 34, 36, 38, 40) empfängt und angesteuert oder zurückgesetzt wird, um die Zeitgeberoperation auf den Empfang jeder Anzeige des Sensors (26, 28, 32, 34, 36, 38, 40) zu beginnen oder wieder zu beginnen, wobei die Dauer der Zeitgeberoperation länger als die Periode zwischen aufeinanderfolgenden Fällen des Ersatzes ist und wobei die Überwachungseinrichtung (24, 30) die Blockiereinrichtung (20, 22) nur in dem Fall aktiviert, wo der rücksetzbare Zeitgeber (42) keine Zeitgeberoperation durchführt.

6. Nachlaufregler nach Anspruch 5, dadurch gekennzeichnet, daß der rücksetzbare Zeitgeber (42) ein Register (44) in einen ersten Zustand setzt, wenn er keine Zeitgeberoperation durchführt, wobei das Register (44) in einem zweiten Zustand gesetzt wird, wenn ein extern zugeführtes Rücksetzsignal (46) abgegeben wird, wobei das Register (44) in seinen ersten Zustand die Blockiereinrichtung (20, 22) aktiviert und in seinem zweiten Zustand außer Betrieb setzt und die Energiezufuhr zur Last (12 vom Leistungsverstärker (10) von dem Augenblick an unterbrochen wird, wo der rücksetzbare Zeitgeber (42) während einer Zeitgeberoperation nicht zurückgesetzt wird, die Zeitgeberoperation beendet wird und das Rücksetzsignal (46) von außen zugeführt wird.

7. Nachlaufregler nach Anspruch 5 oder 6, dadurch gekennzeichnet, daß der Sensor (26, 28, 32, 34, 36, 38, 40) einen ersten Komparator (26), der als erstes Eingangssignal das Ausgangssignal des Leistungsverstärkers (10) und als zweites Eingangssignal eine erste Referenzspannung (+VE REF) empfängt und ein logisches Ausgangssignal abgibt, das anzeigt, ob das Ausgangssignal des Leistungsverstärkers (10) größer oder kleiner als die erste Referenzspannung (+VE REF) ist, und einen zweiten Komparator (28) enthält, der als erstes Eingangssignal das Ausgangssignal des Leistungsverstärkers (10) und als zweites Eingangssignal eine zweite Referenzspannung (−VE REF) empfängt und ein logisches Ausgangssignal abgibt, das anzeigt, ob das Ausgangssignal des Leistungsverstärkers (10) größer oder kleiner als die zweite Referenzspannung (−VE REF) ist.

8. Nachlaufregler nach Anspruch 7, gekennzeichnet durch eine Impulserzeugungsschaltung (32, 34, 36, 38, 40), die als erstes Eingangssignal das Ausgangssignal des ersten Komparators (26) und als zweites Eingangssignal das Ausgangssignal des zweiten Komparators (28) empfängt und einen Ausgangsimpuls für jeden Fall abgibt, daß das Ausgangssignal des ersten Komparators (26) oder das Ausgangssignal des zweiten Komparators (28) seine jeweilige Anzeige ändert.

9. Nachlaufregler nach einem der vorstehenden Ansprüche, dadurch gekennzeichnet, daß die Blockiereinrichtung einen Schalter (20, 22) enthält, der den Ausgang des Leistungsverstärkers (10) von der Last (12) in Abhängigkeit von dem Ausgangssignal der Überwachungseinrichtung (24, 30) trennt.

10. Nachlaufregler nach Anspruch 9, gekennzeichnet durch einen Energieverbraucher zur Ableitung der Energie von der Last (12) im Falle der Betätigung des Schalters (20, 22).

11. Nachlaufregler nach einem der vorstehenden Ansprüche für die Positioniereinrichtung einer Lese/Schreibkopfanordnung in einem Plattendatenspeicher, dadurch gekennzeichnet, daß der Leistungsverstärker aus einem Spannungsverstärker (10) und die Last (12) aus einem Elektromotor zum Antrieb der Kopfanordnung besteht.

12. Nachlaufregler nach Anspruch 11 in Verbindung mit Anspruch 10, dadurch gekennzeichnet, daß der Schalter aus einem elektromagnetischen Relais (20, 22) besteht und der Energieverbraucher aus einem zweiten Kontaktsatz des Relais' zum Kurzschließen der Eingänge des Motors nach der Trennung des Motors vom Ausgang des Leistungsverstärkers (10) gebildet wird.

13. Nachlaufregler nach Anspruch 3 oder 4 oder nach einem der Ansprüche 5 bis 12 in Abhängigkeit von Anspruch 3, dadurch gekennzeichnet, daß das Testwort (54) aus einem mehrfachen, parallelen Binärziffernwort besteht, das der kleinsten Binärziffer entspricht, die, wenn sie als Eingangssignal an den Digital-Analogumsetzer (62) abgegeben wird, dafür sorgt, daß das analoge Ausgangssignal (18) groß genug ist, den Leistungsverstärker in Abwesenheit des Rückkopplungssignals in die Sättigung zu bringen.

14. Nachlaufregler nach Anspruch 3 oder 4 oder nach einem der Ansprüche 5 bis 12 in Abhängigkeit von Anspruch 3, dadurch gekennzeichnet, daß das Testwort (54) aus einem mehrfachen, parallelen Binärziffernwort besteht, das der kleinsten Binärziffer entspricht, die, wenn sie als Eingangssignal an den Digital-Analogumsetzer (62) abgegeben wird, dafür sorgt, daß das analoge Ausgangssignal (18) groß genug ist, den Sättigungszustand des Ausgangs des Leistungsverstärkers (10) selbst dann zu ändern, wenn der Ausgang des Leistungsverstärkers (10) bei Abgabe eines vorbestimmten Leistungsbetrages an die Last (12) bereits gesättigt ist.

Fig. 1

SIGN BIT 52

DEMAND WORD 50

TEST WORD GENERATOR 54

MULTI-PLEXER 56 58

FREE-RUNNING TIMER 60

BIPOLAR D TO A CONVERTOR 62

DEMAND CONTROLLER

SUMMING JUNCTION

18 16

POWER AMPLIFIER 10

22

HEAD MOVEMENT

VOICECOIL POSITION ACTUATOR 12

RELAY 20

POSITION TRANSDUCER 14

48

RETRIGGERABLE MONOSTABLE 42

OR 40

EX OR 34 32

EX OR 38 36

-1

-1

MONITOR

26

28

+VE REF.

-VE REF.

SET 44

EXTERNAL RESET 46

R/S FLIPFLOP

DECISION CIRCUIT 30

24

0 060 858

Fig. 2A

Fig. 2B